# EUROPÄISCHE PATENTSCHRIFT

(11) **EP 3 833 562 B1**
(45) Veröffentlichungstag und Bekanntmachung des Hinweises auf die Patenterteilung: **12.10.2022**
(21) Anmeldenummer: 19755835.6
(22) Anmeldetag: 02.08.2019
(51) Int. Cl.: B60H 1/00, B60H 1/32

(54) **VERFAHREN ZUM BETREIBEN EINER KÄLTEANLAGE FÜR EIN FAHRZEUG MIT EINEM EINE WÄRMEPUMPENFUNKTION AUFWEISENDEN KÄLTEMITTELKREISLAUF**
METHOD FOR OPERATING A REFRIGERATION SYSTEM FOR A VEHICLE, HAVING A REFRIGERANT CIRCUIT HAVING A HEAT PUMP FUNCTION
PROCÉDÉ DE FONCTIONNEMENT D'UNE INSTALLATION DE REFROIDISSEMENT POUR UN VÉHICULE COMPORTANT UN CIRCUIT D'AGENT RÉFRIGÉRANT COMPRENANT UNE FONCTION DE POMPE À CHALEUR

(30) Priorität: 07.08.2018 DE 102018213232
(43) Veröffentlichungstag der Anmeldung: 16.06.2021
(73) Patentinhaber: Audi AG, 85045 Ingolstadt (DE)
(72) Erfinder: SCHROEDER, Dirk, 85077 Manching (DE); REBINGER, Christian, 80807 München (DE); ROTTENKOLBER, Helmut, 93349 Mindelstetten (DE)
(86) Internationale Anmeldenummer: PCT/EP2019/070918
(87) Internationale Veröffentlichungsnummer: WO 2020/030556

(56) Entgegenhaltungen:
- WO-A1-2011/029538
- DE-A1-102012 108 731
- DE-A1-102013 021 360
- US-A1- 2011 174 000
- US-A1- 2017 182 867

## Beschreibung

Die Erfindung betrifft ein Verfahren zum Betreiben einer Kälteanlage für ein Fahrzeug mit einem eine Wärmepumpenfunktion aufweisenden Kältemittelkreislauf. Ferner betrifft die Erfindung eine Kälteanlage zur Durchführung des erfindungsgemäßen Verfahrens.

Ein Verfahren zum Betreiben einer Kälteanlage für ein Fahrzeug mit einem eine Wärmepumpenfunktion aufweisenden Kältemittelkreislauf ist aus der DE 10 2013 021 360 A1 bekannt. Dieser Kältemittelkreislauf weist einen äußeren Wärmeübertrager zur Durchführung eines Kälteanlagenbetriebs als Kondensator oder Gaskühler auf. Zur Durchführung einer Wärmepumpenfunktion weist der Kältemittelkreislauf einen Chiller zur Batteriekühlung sowie einen Chiller zur Kühlung eines Antriebsstranges auf, die jeweils als Wärmequelle zur Durchführung eines Wärmepumpenbetriebs dienen. Mit der derart erzeugte Wärme wird mittels eines inneren Heizkondensators oder Heizgaskühlers die Zuluft in einen Fahrzeuginnenraum erwärmt. Zur Durchführung eines Nachheizbetriebs wird Kältemittel dem inneren Heizkondensator oder Heizgaskühler, anschließend über einen als Kältemittelsammler ausgebildeten Verbindungsknoten zunächst der Hochdruckseite eines inneren Wärmeübertragers zugeführt und anschließend über entsprechende Expansionsorgane in den Verdampfer und/oder in wenigstens einen der beiden Chiller entspannt, bevor das Kältemittel wieder zurück zum Kältemittelverdichter strömen kann. Der zur Durchführung eines Kälteanlagenbetriebs dienende Kondensator oder Gaskühler ist über einen ein Regelventil aufweisenden Leitungsabschnitt mit dem als Kältemittelsammler ausgebildeten Verbindungsknoten verbunden. Dieser Leitungsabschnitt wird ausschließlich im Kälteanlagenbetrieb in Richtung des Verbindungsknotens mit Kältemittel durchströmt.

Eine Kälteanlage gemäß der DE 10 2012 108 731 A1 zur Konditionierung der Zuluft eines Fahrgastraums eines Fahrzeugs besteht aus einem Kältemittelkreislauf und einem Motorkühlkreislauf, wobei der Kältemittelkreislauf für einen kombinierten Kälteanlagen- und Wärmepumpenmodus sowie einen Nachheizmodus zum Heizen, Kühlen und Entfeuchten der Zuluft in den Fahrgastraum ausgebildet ist. Ein äußerer Kondensator wird neben eines Einsatzes im Kälteanlagenmodus auch als Wärmepumpen-Verdampfer eingesetzt. Im Nachheizmodus wird das auf Hochdruck verdichtete Kältemittel vom Ausgang eines Kältemittelverdichters über eine Ventilanordnung sowohl einem Heizregister als auch dem äußeren Kondensator zugeführt, so dass mit dem äußeren Kondensator Wärme an die Umgebungsluft und mit dem Heizregister Wärme an den dem Fahrgastraum zugeführten Luftstrom abgegeben wird.

Die US 2011/174000 A1 beschreibt eine Kälteanlage für ein Fahrzeug mit einem Kältemittelkreislauf, einem zur Kühlung eines Fahrmotors dienenden Motor-Kühlmittelkreislauf sowie einem zur Kühlung einer Batterie dienenden Batterie-Kühlmittelkreislauf. Ein äußerer Kondensator des Kältemittelkreislaufes wird als Wärmepumpen-Verdampfer eingesetzt, dessen Wärme einem Heizregister zur Erwärmung eines in einen Fahrgastraum des Fahrzeugs strömenden Luftstroms zugeführt wird. Wird von den wärmeerzeugenden Komponenten des Fahrzeugs, wie bspw. dem Fahrmotor überschüssige Wärme erzeugt, wird diese über einen Radiator, welcher in dem Motor-Kühlmittelkreislauf angeordnet ist, an die Umgebung abgeführt.

Auch aus der WO 2011/029538 A1 ist ein in einem AC- und Heizbetrieb betreibbarer Kältemittelkreislauf einer Kälteanlage mit einer Wärmepumpenfunktion für ein Elektrofahrzeug mit einer Elektromaschine und einer zugehörigen Batterie bekannt. Bei diesem Kältemittelkreislauf ist zusätzlich ein mit der Elektromaschine thermisch gekoppelter Wärmeübertrager und/oder ein mit der Batterie thermisch gekoppelter Wärmeübertrager zuschaltbar. In dem Kältemittelkreislauf sind zumindest ein äußerer Wärmeübertrager zur Durchführung des AC- oder Heizbetriebs und zumindest ein innerer Heizkondensator eines Klimageräts geschaltet. In einem Heizbetrieb zur Erwärmung des Fahrzeuginnenraums arbeitet der äußere Wärmeübertrager als WärmepumpenVerdampfer und der innere Heizkondensator des Klimageräts als Kondensator. Zur Durchführung eines Nachheizbetriebs wird eine benutzerseitig eingestellte Sollaustrittstemperatur der Zuluft mit einer Taktung eines 3/2-Wegeventils mittels Regelung des dem Heizkondensator zugeführten Kältemittelstroms eingestellt. So wird nur ein Teil des Kältemittelstroms durch den Heizkondensator geführt, während ein verbleibender Teil des Kältemittelstroms direkt zum äußeren Wärmeübertrager strömt. Das dort abgekühlte Kältemittel wird weiter zu einem Expansionsorgan eines Verdampfers des Klimagerätes geführt.

Bei einer Kälteanlage für ein Fahrzeug mit einem eine Wärmepumpenfunktion aufweisenden Kältemittelkreislauf werden gemäß der US 2017/182867 A1 als Wärmequellen für die Durchführung eines Nachheizbetriebs ein thermisch mit einer Batterie oder einem Antriebsstrang gekoppelter Wärmeübertrager, der einem Fahrgastraum zuzuführende Luftstrom sowie die Umgebungsluft mittels eines als Wärmepumpen-Verdampfer eingesetzten äußeren Wärmeübertragers eingesetzt.

Aus der DE 10 2016 121 362 A1 ist eine Kälteanlage für ein Fahrzeug mit einem Kältemittelkreislauf bekannt, welcher mit wenigstens einem Kühlmittelkreislauf als Chiller thermisch gekoppelt ist. Dieser für einen kombinierten Betrieb im reinen Kälteanlagen-Betrieb, im Wärmepumpen-Betrieb und im Nachheiz-Betrieb (Reheat) ausgebildeten Kältemittelkreislauf zum Kühlen, Heizen und Nachheizen der Zuluft für einen Fahrgastraum des Fahrzeugs weist einen Kältemittelverdichter, einen ersten als Verdampfer oder als Kondensator/Gaskühler betreibbaren Kältemittel-Luft-Wärmeübertrager und einen zweiten als Kondensator/Gaskühler betreibbaren Kältemittel-Luft-Wärmeübertrager zum Konditionieren der Zuluft auf, wobei der erste und zweite Kältemittel-Luft-Wärmeübertrager in einem Klimagerät angeordnet sind. Im Wärmepumpen-Betrieb wird mittels eines dem ersten Kältemittel-Luft-Wärmeübertrager zugeordneten Expansionsventils das Kältemittel von einem Hochdruckniveau auf ein Mitteldruckniveau entspannt, bevor es durch den ersten Kältemittel-Luft-Wärmeübertrager strömt und erst anschließend mittels eines weiteren Expansionsventils auf Niederdruckniveau entspannt. Hierbei wird in dem als Kondensator/Gaskühler betriebenen ersten Kältemittel-Luft-Wärmeübertrager Wärme vom Kältemittel an die Zuluft des Fahrgastraums übertragen. Ebenso wird im Nachheiz-Betrieb mittels des dem ersten Kältemittel-Luft-Wärmeübertrager zugeordnete Expansionsventil das Kältemittel vom Hochdruckniveau auf ein Mitteldruckniveau in diesen ersten Kältemittel-Luft-Wärmeübertrager entspannt. Hierbei wird dieses Expansionsventil genutzt, um ein geeignetes Mitteldruckniveau des Kältemittels und damit eine geeignete Verdampfungstemperatur zum Entfeuchten der Zuluft des Fahrgastraums einzustellen. In diesem als Verdampfer betriebenen ersten Kältemittel-Luft-Wärmeübertrager wird das Kältemittel unter Aufnahme von Wärme verdampft. Anschließend wird das Kältemittel in dem weiteren Expansionsventil auf Niederdruckniveau entspannt.

Eine Kälteanlage für ein Fahrzeug zur Konditionierung der Zuluft für einen Fahrgastraum beschreibt auch die DE 10 2012 108 891 A1. Diese Kälteanlage weist ein Gehäuse mit zwei Strömungskanälen zum Leiten von Luft sowie einen Kältemittelkreislauf mit einem Verdampfer und einem Kondensator auf, wobei der Verdampfer im ersten Strömungskanal und der Kondensator im zweiten Strömungskanal angeordnet sind. Die Kälteanlage ist sowohl zum Kühlen und zum Heizen des Fahrgastraumes als auch für einen Nachheiz-Betrieb ausgebildet. Die Einstellung der jeweiligen Betriebsart erfolgt lediglich über die Steuerung von innerhalb des Gehäuses der Kälteanlage angeordneten Luftleiteinrichtungen und nicht über die Regelung des Kältemittelkreislaufs.

Ferner ist auch ein Kältemittelkreislauf einer Kälteanlage für ein Fahrzeug gemäß der DE 10 2009 028 522 A1 für einen kombinierten Kälteanlagen- und Wärmepumpenbetrieb sowie für einen Nachheiz-Betrieb ausgebildet. Im Wärmepumpen-Betrieb dient ein erster Kondensator/Gaskühler als Wärmepumpen-Verdampfer zur Aufnahme von Wärme aus der Umgebungsluft und ein zweiter Kondensator/Gaskühler als Heizregister zum Erwärmen der Zuluft des Fahrgastraums. Im Nachheiz-Betrieb wird das Kältemittel nach dem Durchströmen des zweiten Kondensators/Gaskühlers mittels eines Expansionsorgans auf ein Mitteldruckniveau entspannt, mit welchem das kältemittelseitige Temperaturniveau im Verdampfer geregelt wird.

Schließlich ist auch aus der DE 10 2016 115 235 A1 eine Kälteanlage zur Konditionierung der Zuluft eines Fahrgastraums eines Fahrzeugs bekannt, welche für den Kälteanlagen-Betrieb, im Wärmepumpen-Betrieb und im Nachheiz-Betrieb ausgebildet ist. Die Einstellung der unterschiedlichen Betriebsmodi erfolgt über die Steuerung von Luftklappen und Luftleiteinrichtungen.

Die Aufgabe der Erfindung besteht darin, ein Verfahren zum Betreiben einer Kälteanlage für ein Fahrzeug mit einem Kältemittelkreislauf anzugeben, mit welchem eine verbesserte Nachheiz-Funktionalität bereitgestellt werden kann. Ferner ist es Aufgabe der Erfindung, eine Kälteanlage zur Durchführung des erfindungsgemäßen Verfahrens anzugeben, die in der Lage sein soll, diese Funktion vollständig über den Kältemittelkreislauf abzubilden, so dass nur ein reduzierter zusätzlicher Heizaufwand oder im optimalen Fall kein zusätzlicher Heizaufwand mit einem elektrischen Heizer erforderlich wird, um eventuelle Defizite im Heizbedarf zu decken.

Die erstgenannte Aufgabe wird gelöst durch ein Verfahren mit den Merkmalen des Patentanspruchs 1.

Eine solches Verfahren zum Betreiben einer Kälteanlage für ein Fahrzeug mit einem eine Wärmepumpenfunktion aufweisenden Kältemittelkreislauf, bei welchem
- der Kältemittelkreislauf mit einem äußeren Wärmeübertrager ausgebildet wird, welcher entweder zur Durchführung eines Kälteanlagenbetriebs als Kondensator oder Gaskühler oder zur Durchführung eines Wärmepumpenbetriebs als Wärmepumpen-Verdampfer betrieben wird,
- der Kältemittelkreislauf mit einem Verdampfer und einem inneren Heizkondensator oder Heizgaskühler zur Durchführung eines Heizbetriebs ausgebildet wird,
- der innere Heizkondensator oder Heizgaskühler zur Durchführung eines Nachheiz-Betriebs stromabwärts über ein Nachheiz-Expansionsorgan mit dem äußeren Wärmeübertrager fluidverbunden wird, wobei
- in Abhängigkeit eines die erforderliche Nachheizleistung anzeigenden Kälteanlagenparameters der Öffnungsquerschnitt des Nachheiz-Expansionsorgans gesteuert wird.

Mit einem solchen Verfahren ist es möglich, über die Steuerung des Öffnungsquerschnittes des Nachheiz-Expansionsorgans einen großen Funktionsbereich der Kälteanlage, nämlich vom ausschließlichen Kühlen der Zuluft des Fahrgastraums des Fahrzeugs bis zum verstärkten Nachheizen der gekühlten und entfeuchteten Zuluft in einem großen Umgebungstemperaturbereich mit unterschiedlichsten Umgebungslastbedingungen zu realisieren. Ferner ist für dieses erfindungsgemäße Verfahren nur ein geringer Aufwand erforderlich, da das Nachheiz-Expansionsorgan als zentrale Komponente die Hauptfunktion, nämlich den Nachheiz-Betrieb und damit die Bereitstellung einer geforderten Wärmemenge steuert.

Nach einer bevorzugten Ausbildung der Erfindung wird
- die Kälteanlage mit einem den Verdampfer und den inneren Heizkondensator oder Heizgaskühler aufnehmenden Klimagerät mit wenigstens einer zwischen einer Offen- und Schließposition schwenkbaren Temperaturklappe bereitgestellt, wobei in Abhängigkeit der Position der Temperaturklappe zumindest ein Teilluftstrom des den Verdampfer durchströmenden Zuluftstroms über den inneren Heizkondensator oder Heizgaskühler geleitet wird oder der innere Heizkondensator oder Heizgaskühler im Bypass von dem Zuluftstrom vollständig umströmt wird, und
- die Position der Temperaturklappe als Klimaanlagenparameter verwendet.

Mit einer solchen Temperaturklappe wird im Nachheiz-Betrieb zumindest ein Teilluftstrom des gekühlten Zuluftstroms an dem Heizkondensator oder Heizgaskühler erwärmt und dem verbleibenden Zuluftstrom beigemischt. Die Position dieser Temperaturklappe zeigt den Nachheizbedarf an. Ist die Temperaturklappe bspw. nur wenig geöffnet, wird also nur ein geringer Luftmassenstrom über den Heizkondensator oder Heizgaskühler geleitet, besteht nur ein geringer Nachheizbedarf. Eine weit geöffnete oder vollständig geöffnete Temperaturklappe zeigt einen großen bzw. einen maximalen Nachheizbedarf an.

Eine besonders vorteilhafte Ausgestaltung der Erfindung sieht vor, dass
- für die Temperaturklappe zur Definition eines Positionsbereichs eine obere Offenposition (x₁-Position) und eine untere Offenposition (x₂-Position, x₂ < x₁) vorgegeben wird,
- bei einer x-Position der Temperaturklappe mit x > x₁ der Öffnungsquerschnitt des Nachheiz-Expansionsorgans verkleinert wird, und
- bei einer x-Position der Temperaturklappe mit x < x₂ der Öffnungsquerschnitt des Nachheiz-Expansionsorgans vergrößert wird.

Wird ein großer Nachheizbedarf durch die Position der Temperaturklappe angezeigt, befindet sich also die Temperaturklappe in einer x-Position mit x > x₁, wird das Nachheiz-Expansionsorgan angedrosselt, d. h. der Öffnungsquerschnitt verkleinert, wodurch zum einen weniger Wärme über den äußeren Wärmeübertrager an die Umgebungsluft des Fahrzeugs abgegeben wird, jedoch gleichzeitig der Hochdruck in dem Heizkondensator oder Heizgaskühler und damit auch die Temperatur in demselben und gleichzeitig die Nachheizleistung bzw. das Nachheizleistungspotenzial ansteigt. Infolgedessen ändert sich die x-Position der Temperaturklappe in Richtung des Positionsbereichs, d. h. die Temperaturklappe wird in Richtung deren Schließposition verschwenkt.

Wird ein geringer Nachheizbedarf durch die Position der Temperaturklappe angezeigt, befindet sich also die Temperaturklappe in einer x-Position mit x < x₂, wird das Nachheiz-Expansionsorgan entdrosselt, d. h. der Öffnungsquerschnitt vergrößert, wodurch zum einen mehr Wärme über den äußeren Wärmetauscher an die Umgebungsluft des Fahrzeugs abgegeben wird jedoch gleichzeitig der Hochdruck in dem Heizkondensator oder Gaskühler und damit auch die Temperatur in demselben und gleichzeitig die Nachheizleistung bzw. das Nachheizleistungspotenzial absinkt. Infolgedessen ändert sich die x-Position der Temperaturklappe in Richtung des Positionsbereichs x₂ und höher, jedoch x<x₁, d. h. die Temperaturklappe wird in Richtung deren Offenposition verschwenkt. Sollte letztlich der Nachheizbedarf kontinuierlich weiter sinken, so entdrosselt das Nachheiz-Expansionsorgan bis auf maximalen Öffnungsquerschnitt und verfährt die mindestens eine Temperaturklappe immer weiter in Richtung geschlossen bei sich gleichzeitig reduzierender Luftmenge über den Heizkondensator oder Heizgaskühler bis dieser vollständig vom Luftstrom gebypasst wird.

Die Steuerung des Nachheiz-Expansionsorgans erfolgt so lange, bis die Temperaturklappe eine x-Position innerhalb des definierten Positionsbereichs erreicht.

Sind in dem Klimagerät zwei Temperaturklappen vorgesehen, wird der Öffnungsquerschnitt des Nachheiz-Expansionsorgans so lange gesteuert, bis im Idealfall beide, mindestens jedoch eine der Temperaturklappen eine x-Position innerhalb des definierten Positionsbereichs erreichen

Alternativ ist nach einer bevorzugten Weiterbildung der Erfindung vorgesehen, dass bei einem Klimagerät mit zwei Temperaturklappen
- der Mittelwert *x̅* der x-Positionen der beiden Temperaturklappen gebildet wird,
- bei einem Mittelwert *x̅* der x-Positionen der Temperaturklappen mit *x̅* > x₁ der Öffnungsquerschnitt des Nachheiz-Expansionsorgans verkleinert wird, und
- bei einem Mittelwert der x-Positionen der Temperaturklappen mit *x̅* < x₂ der Öffnungsquerschnitt des Nachheiz-Expansionsorgans vergrößert wird.

Bei dieser Weiterbildung des erfindungsgemäßen Verfahrens werden die Istwerte der x-Positionen der Temperaturklappen gemittelt und mit den x1- und x₂-Werten verglichen.

Eine weitere Alternative bei einem Klimagerät mit zwei Temperaturklappen besteht weiterbildungsgemäß darin, dass
- die Temperaturklappe mit der größten Offenposition bestimmt wird,
- bei einer x-Position der Temperaturklappe mit x > x₁ der Öffnungsquerschnitt des Nachheiz-Expansionsorgans verkleinert wird, und
- bei einer x-Position der Temperaturklappe mit x < x₂ der Öffnungsquerschnitt des Nachheiz-Expansionsorgans vergrößert wird.

Anstelle der Position der Temperaturklappe als die erforderliche Nachheizleistung anzeigenden Kälteanlagenparameter können auch andere Kälteanlagenparameter verwendet werden.

So ist es weiterbildungsgemäß vorgesehen, dass
- die Kälteanlage mit einem den Verdampfer und den inneren Heizkondensator oder Heizgaskühler aufnehmenden Klimagerät, einem Steuergerät, mit welchem ein Sollwert für eine Ausblastemperatur an einem Ausströmer des Klimagerätes bereitgestellt wird, und einem Messmittel, mit welchem ein Istwert der Ausblastemperatur an dem Ausströmer des Klimagerätes erfasst wird, und
- der Sollwert der Ausblastemperatur als Klimaanlagenparameter verwendet wird.

Mit einem solchen Sollwert der Ausblastemperatur als Klimaanlagenparameter wird
- ein Temperaturschwellwert mit einem Toleranzband für den Sollwert der Ausblastemperatur bestimmt,
- bei einem Istwert der Ausblastemperatur größer als der größte Wert des Toleranzbandes der Öffnungsquerschnitt des Nachheiz-Expansionsorgans vergrößert, und
- bei einem Istwert der Ausblastemperatur kleiner als der kleinste Wert des Toleranzbandes der Öffnungsquerschnitt des Nachheiz-Expansionsorgans verkleinert.

Da diese Sollausblastemperatur eine direkte Steuergröße für den Hochdruck und damit für die Solllufttemperatur am Heizkondensator oder Heizgaskühler darstellt, zeigt sie natürlich an, ob ein großer oder ein geringer Nachheizbedarf besteht.

Ferner ist es weiterbildungsgemäß vorgesehen, dass
- die Kälteanlage mit einem den Verdampfer und den inneren Heizkondensator oder Heizgaskühler aufnehmenden Klimagerät mit wenigstens einem Ausströmer bereitgestellt wird, wobei mittels einer verstellbaren Ausströmer-Klappe der Ausströmer-Querschnitt einstellbar ist, und
- die Position der Ausströmer-Klappe als Klimaanlagenparameter verwendet wird.

Hierbei wird weiterbildungsgemäß
- für die Ausströmer-Klappe zur Definition eines Positionsbereichs eine obere Offenposition (x₁-Position) und eine untere Offenposition (x₂-Position, x₂ < x₁) vorgegeben,
- bei einer x-Position der Ausströmer-Klappe mit x > x₁ der Öffnungsquerschnitt des Nachheiz-Expansionsorgans vergrößert, und
- bei einer x-Position der Ausströmer-Klappe mit x < x₂ der Öffnungsquerschnitt des Nachheiz-Expansionsorgans verkleinert.

Als Ausströmer sind die sogenannten Mannanströmer, Fußraumanströmer und Defrosteranströmer geeignet.

Eine weitere Alternative zur Verwendung der Position der Temperaturklappe als Klimaanlagenparameter besteht weiterbildungsgemäß darin, dass
- die Kälteanlage mit einem den Verdampfer und den inneren Heizkondensator oder Heizgaskühler aufnehmenden Klimagerät, einem Steuergerät, mit welchem ein Sollwert für die Lufttemperatur der den inneren Heizkondensator oder Heizgaskühler durchströmenden und der an diesem austretenden Luft bestimmt wird, und einem Messmittel ausgebildet wird, mit welchem ein Istwert der Lufttemperatur erfasst wird, und
- der Sollwert der Lufttemperatur der den inneren Heizkondensator oder Heizgaskühler durchströmenden und der an diesem austretenden Luft als Klimaanlagenparameter verwendet wird.

Hierbei wird weiterbildungsgemäß
- ein Temperaturschwellwert mit einem Toleranzband für den Sollwert der Lufttemperatur der den inneren Heizkondensator oder Heizgaskühler durchströmenden und austretenden Luft bestimmt,
- bei einem Istwert der Lufttemperatur größer als der größte Wert des Toleranzbandes der Öffnungsquerschnitt des Nachheiz-Expansionsorgans vergrößert, und
- bei einem Istwert der Lufttemperatur kleiner als der kleinste Wert des Toleranzbandes der Öffnungsquerschnitt des Nachheiz-Expansionsorgans verkleinert.

Eine weitere Alternative zur Verwendung der Position der Temperaturklappe als Klimaanlagenparameter besteht weiterbildungsgemäß darin, dass
- die Kältemitteleintrittstemperatur des Kältemittels am Kältemitteleintritt des inneren Heizkondensators oder Heizgaskühlers mittels eines Kältemitteleintritts-Temperatursensors gemessen wird, und
- der Wert der gemessenen Kältemitteleintrittstemperatur als Klimaanlagenparameter verwendet wird.

Hierbei wird weiterbildungsgemäß
- ein Temperaturschwellwert mit einem Toleranzband für den Wert der Kältemitteleintrittstemperatur bestimmt,
- bei einem Wert der Kältemitteleintrittstemperatur größer als der größte Wert des Toleranzbandes der Öffnungsquerschnitt des Nachheiz-Expansionsorgans vergrößert, und
- bei einem Wert der Kältemitteleintrittstemperatur kleiner als der kleinste Wert des Toleranzbandes der Öffnungsquerschnitt des Nachheiz-Expansionsorgans verkleinert.

Schließlich besteht eine weitere Alternative zur Verwendung der Position der Temperaturklappe als Klimaanlagenparameter weiterbildungsgemäß darin, dass
- der Hochdruck am inneren Heizkondensator oder Heizgaskühler mittels eines Drucksensors gemessen wird, und
- der Druckwert des Hochdrucks als Klimaanlagenparameter verwendet wird.

Hierzu wird weiterbildungsgemäß
- ein Druckschwellwert mit einem Toleranzband für den Druckwert des Hochdrucks am inneren Heizkondensator oder Heizgaskühler bestimmt,
- bei einem Druckwert größer als der größte Wert des Toleranzbandes der Öffnungsquerschnitt des Nachheiz-Expansionsorgans vergrößert, und
- bei einem Druckwert kleiner als der kleinste Wert des Toleranzbandes der Öffnungsquerschnitt des Nachheiz-Expansionsorgans verkleinert.

Nach einer letzten besonders bevorzugten Weiterbildung der Erfindung wird die Querschnittsöffnung des Nachheiz-Expansionsorgans derart dimensioniert, dass bei einer minimalen Querschnittsöffnung das Nachheiz-Expansionsorgan geschlossen wird und bei einer maximalen Querschnittsöffnung eine Fläche freigegeben wird, die den Querschnittsflächen der Klimaleitungen des Kältemittelkreislaufs stromaufwärts und stromabwärts des Nachheiz-Expansionsorgans entspricht, d. h. sich an deren Dimensionierung orientiert.

Bei einem solchen Nachheiz-Expansionsorgan stellen sich im Nachheizbetrieb Querschnitte ein, die zwischen der maximalen und der minimalen Querschnittöffnung liegen.

Weitere Vorteile, Merkmale und Einzelheiten der Erfindung ergeben sich aus der nachfolgenden Beschreibung bevorzugter Ausführungsformen sowie anhand der Zeichnungen. Dabei zeigen:
- Figur 1: ein Schaltbild einer Kälteanlage zur Durchführung des erfindungsgemäßen Verfahrens, und
- Figur 2: ein Ablaufdiagramm zur Erläuterung des erfindungsgemäßen Verfahrens.

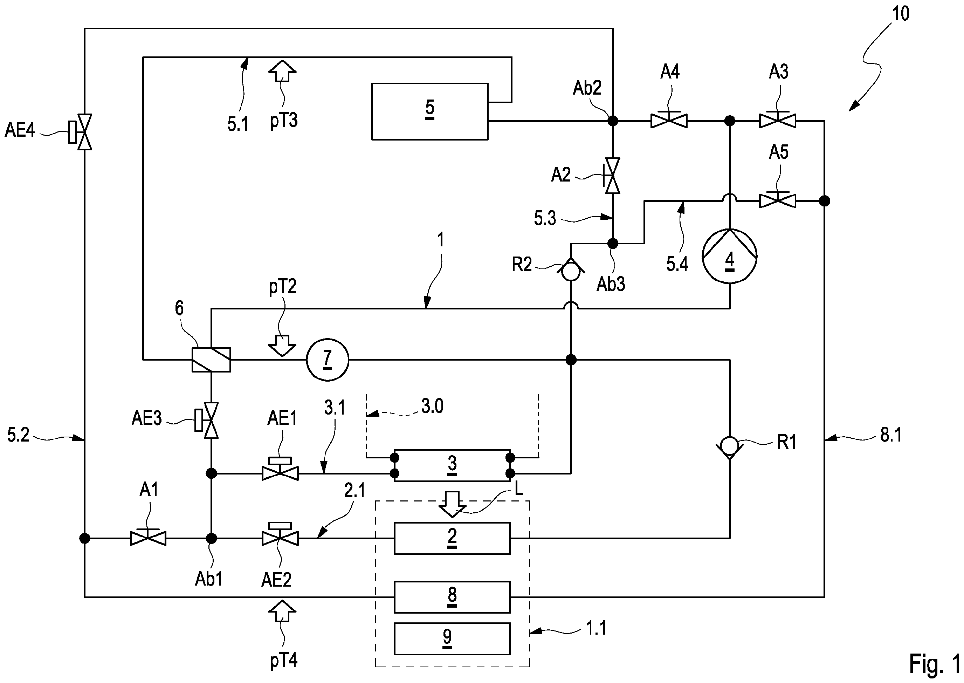

Vor der Erläuterung des mittels der in Figur 1 dargestellten Kälteanlage 10 realisierten erfindungsgemäßen Verfahrens wird diese Kälteanlage 10 mit einem Kältemittelkreislauf 1 beschrieben.

Dieser Kältemittelkreislauf 1 kann sowohl in einem Kälteanlagenbetrieb (kurz AC-Betrieb genannt) und in einem Wärmepumpenmodus betrieben werden und weist zwei Verdampfer auf, nämlich einen Verdampfer 2 und einen Chiller 3, welcher mit einem Kühlmittelkreislauf 3.0 zur Kühlung, bspw. einer Hochvoltbatterie thermisch verbunden ist. Unter einem AC-Betrieb wird ein Kälteanlagen- oder Kühlbetrieb des Kältemittelkreislaufs 1 verstanden.

Der Kältemittelkreislauf 1 gemäß Figur 1 besteht aus:
- einem Kältemittelverdichter 4,
- einem als Kondensator oder Gaskühler ausgebildeten äußeren Wärmeübertrager 5 mit einem demselben in seiner Funktion als Wärmepumpenverdampfer für den Heizbetrieb zugeordneten Expansionsventil AE3,
- einem inneren Wärmeübertrager 6,
- einem niederdruckseitigen Akkumulator 7,
- einem Innenraum-Verdampferzweig 2.1 mit dem als Frontverdampfer ausgebildeten Verdampfer 2 und einem vorgeschalteten Expansionsventil AE2,
- einem dem Verdampfer 2 nachgeschalteten Rückschlagventil R1, welches über den Akkumulator 7 und den niederdruckseitigen Abschnitt des inneren Wärmeübertragers 6 mit der Eintrittsseite des Kältemittelverdichters 4 fluidverbunden ist,
- einem Chiller-Zweig 3.1 mit dem Chiller 3, einem diesem vorgeschalteten Expansionsventil AE1, wobei der Chiller 3 neben der Kühlung bspw. einer elektrischen Komponente des Fahrzeugs auch zur Realisierung einer Wasser-Wärmepumpenfunktion unter Nutzung der Abwärme mindestens einer elektrischen Komponente eingesetzt wird,
- einem AC- und Wärmepumpenzweig 5.1 mit dem äußeren Wärmeübertrager 5 und dem Expansionsventil AE3, wobei im Heizbetrieb der AC- und Wärmepumpenzweig 5.1 stromaufwärts über das Expansionsventil AE3 mit dem Innenraum-Verdampferzweig 2.1 unter Bildung eines ersten Abzweigpunktes Ab1 fluidverbindbar ist und stromabwärts über ein Absperrventil A2 mit dem Niederdruckeingang des Kältemittelverdichters 4 fluidverbindbar ist, während im AC-Betrieb der AC- und Wärmepumpenzweig 5.1 stromaufwärts mit einem Absperrventil A4 mit dem Hochdruckausgang des Kältemittelverdichters 4 fluidverbindbar ist,
- einem Heizzweig 8.1 mit einem inneren Heizkondensator 8 oder Heizgaskühler 8 (auch Heizregister genannt), wobei der Heizzweig 8.1 stromaufwärts über ein Absperrventil A3 mit dem Hochdruckausgang des Kältemittelverdichters 4 fluidverbunden ist und stromabwärts über ein Absperrventil A1 mit dem ersten Abzweigpunkt Ab1 und damit mit dem Innenraum-Verdampferzweig 2.1 fluidverbindbar ist,
- einem Reheat-Zweig 5.2 mit einem als Expansionsventil ausgebildeten Nachheiz-Expansionsorgan AE4, wobei der Reheat-Zweig 5.2 stromabwärts mit dem äußeren Wärmeübertrager 5 unter Bildung eines zweiten Abzweigpunktes Ab2 und stromaufwärts mit dem inneren Heizkondensator 8 oder Heizgaskühler 8 fluidverbindbar ist,
- einem Wärmepumpenrückführzweig 5.3 mit einem Absperrventil A2 und einem Rückschlagventil R2 , wobei der Wärmepumpenrückführzweig 5.3 stromaufwärts über den zweiten Abzweigpunkt Ab2 mit dem äußeren Wärmeübertrager 5 und stromabwärts mit dem Akkumulator 7 fluidverbindbar ist,
- einem Absaugzweig 5.4 mit einem Absperrventil A5, wobei der Absaugzweig 5.4 stromaufwärts mit dem inneren Heizkondensator 8 oder Heizgaskühler 8 und stromabwärts über einen dritten Abzweigpunkt Ab3 mit dem Absperrventil A2 und dem Rückschlagventil R2 des Wärmepumpenrückführzweiges 5.3 fluidverbunden ist, und
- einem bspw. als Hochvolt-PTC-Heizelement ausgeführten elektrischen Heizelement 9 als Zuheizer für einen in den Fahrzeuginnenraum geführten Zuluftstrom L, welches zusammen mit dem inneren Heizkondensators 8 oder Heizgaskühler 8 und dem Verdampfer 2 in einem Klimagerät 1.1 dem Heizkondensators 8 oder Heizgaskühler 8 und damit auch dem Verdampfer 2 nachgeschaltet angeordnet ist.

Als Sensoren sind in dem Kältemittelkreislaufs 1 gemäß Figur 1 zur Steuerung und Regelung des Systems mehrere Druck-Temperatursensoren vorgesehen.

So ist dem Kältemittelverdichter 4 ein erster Druck-Temperatursensor pT1 am Hochdruckausgang zugeordnet, ferner ein zweiter Druck-Temperatursensor pT2 am Ausgang des Akkumulators 7, ein dritter Druck-Temperatursensor pT3 am Ausgang des äußeren Wärmeübertragers 5, ein vierter Druck-Temperatursensor pT4 am Ausgang des Heizkondensators 8 oder Heizgaskühlers 8 und schließlich ein fünfter Druck-Temperatursensor pT5 am niederdruckseitigen Ausgang des Chillers 3 angeordnet.

Mit den beiden Absperrorganen A3 und A4 wird der Kältemittelstrom ausgehend von der Hochdruckseite des Kältemittelverdichters 4 in Abhängigkeit des Zustandes dieser beiden Absperrventile entweder bei offenem Absperrventil A4 und gesperrtem Absperrventil A3 in den äußeren Wärmeübertrager 5 geleitet oder strömt bei offenem Absperrventil A3 und geschlossenem Absperrventil A4 in den Heizzweig 8.1. Die beiden Absperrventile A3 und A4 können auch zu einem 3-2-Wegeventil zusammengefasst und als Umschaltventil ausgeführt werden. Entsprechendes gilt auch für die beiden Absperrventile A2 und A5, die zu einem 3-2-Wegeventil als Umschaltventil zusammengefasst werden können.

Die beiden Umschaltventile können in einem finalen Schritt als einziges kompaktes elektrisches Mehrwegeventil zusammengefasst und ausgeführt werden.

Im AC-Betrieb des Kältemittelkreislaufs 1 gemäß Figur 1 strömt das auf Hochdruck verdichtete Kältemittel ausgehend von dem Kältemittelverdichter 4 bei offenem Absperrventil A4 in den äußeren Wärmeübertrager 5, den Hochdruckabschnitt des inneren Wärmeübertragers 6, über das vollständig geöffnete Expansionsventil AE3 sowie des ersten Abzweigpunkt Ab1 mittels des Expansionsventils AE2 in den Innenraum-Verdampferzweig 2.1 und/oder in den Chiller-Zweig 3.1. Aus dem Chiller-Zweig 3.1 strömt das Kältemittel über den Ackumulator 7 und den Niederdruckabschnitt des inneren Wärmeübertragers 6 zurück zum Kältemittelverdichter 4, während das Kältemittel aus dem Innenraum-Verdampferzweig 2.1 über das Rückschlagventil R1 strömt und anschließend über den Akkumulator 7 und den Niederdruckabschnitt des inneren Wärmeübertragers 6 zurück zum Kältemittelverdichter 4 fließen kann.

In diesem AC-Betrieb ist der Heizzweig 8.1 mittels des Absperrventils A3 abgesperrt, so dass heißes Kältemittel, wie bspw. R744, nicht durch den Heizgaskühler 8 strömen kann. Zur Rückholung von Kältemittel aus dem inaktiven Heizzweig 8.1 wird jedoch das als Absperrventil ausgebildete Absperrorgan A5 geöffnet und das Kältemittel kann über das Absperrorgan A5 und das Rückschlagventil R2, bei gleichzeitig geschlossenem Absperrorgan A2 in Richtung des Akkumulators 7 strömen.

Der erste Druck-Temperatursensor pT1 des Kältemittelkreislaufs 1 dient zur Bestimmung der Kältemitteltemperatur sowie des Hochdrucks des verdichteten Mediums am Austritt des Kältemittelverdichters 4. Die Überwachung dieser beiden Größen dient dazu, die maximal zulässigen mechanischen und thermischen Belastungen der Kälteanlage speziell am Austritt des Kältemittelverdichters 4 zu überwachen und ggf. durch Abregelungsmaßnahmen, eingefordert durch ein Steuergerät, bspw. einem Klimasteuergerät, den Systembetrieb zu limitieren, um die zulässigen Höchstwerte nicht zu überschreiten.

Der zweite Druck-Temperatursensor pT2 des Kältemittelkreislaufs 1 dient zur Unterfüllungserkennung, aber auch zur Einstellung und Überwachung eines geforderten Niederdrucks.

Der an der Austrittsseite des äußeren Wärmeübertragers 5 vorgesehene dritte Druck-Temperatursensor pT3 des Kältemittelkreislaufs 1 dient primär zur Einstellung bzw. Überwachung der Systembetriebsgrößen "optimaler Hochdruck" bei überkritischem Systembetrieb bzw. "Unterkühlung nach dem äußeren Wärmeübertrager 5" bei unterkritischem System betrieb.

Der gemäß des Kältemittelkreislaufs 1 nach Figur 1 stromabwärts des Heizkondensators 8 oder Heizgaskühlers 8 angeordnete vierte Druck-Temperatursensor pT4 dient zur Steuerung, aber auch zur Überwachung der unterschiedlichen Betriebsmodi des Kältemittelkreislaufs 1, insbesondere im Wärmepumpenmodus bei aktiv durchströmten Heizkondensator 8 oder Heizgaskühler 8 durch ein Steuergerät bspw. ein Klimasteuergerät.

Der fünfte Druck-Temperatursensor pT5 des Kältemittelkreislaufs 1 dient der Überwachung und Regelung des Überhitzungsgrades am Austritt des Chillers 3.

Im Folgenden soll der Heizbetrieb des Kältemittelkreislaufs 1 nach Figur 1 beschrieben werden.

Im Heizbetrieb des Kältemittelkreislaufs 1 wird unter Einsatz des Chillers 3 zur Realisierung einer Wasser-Wärmepumpe oder unter Einsatz des äußeren Wärmeübertragers 5 als Wärmepumpenverdampfer zur Realisierung einer Luft-Wärmepumpe das Absperrventil A4 geschlossen und das Absperrventil A3 geöffnet, so dass heißes Kältemittel, wie bspw. R744 in den Heizzweig 8.1 strömen kann.

Zur Durchführung der Heizfunktion mittels des Chillers 3 strömt das mittels des Kältemittelverdichters 4 verdichtete Kältemittel über das geöffnete Absperrventil A3 zur Abgabe von Wärme an einen in den Fahrzeuginnenraum geführten Zuluftstrom L in den inneren Heizkondensator 8 oder Heizgaskühler 8 und wird anschließend über das geöffnete Absperrventil A1 und den ersten Abzweigpunkt Ab1 mittels des Expansionsventils AE1 in den Chiller 3 zur Aufnahme von Abwärme der in dem Kühlmittelkreislauf 3.0 angeordneten elektrischen und/oder elektronischen Komponenten entspannt. Bei dieser Heizfunktion sind die Expansionsventile AE3 und AE4 geschlossen, das Absperrventil A5 geschlossen und das Absperrventil A2 geöffnet, wobei das Absperrventil A2 im Wasser-Wärmepumpenbetrieb ausgelagertes Kältemittel aus dem Leitungsstrang 5.1 absaugt und über das Rückschlagventil R2 dem Akkumulator 7 zuführt

Zur Durchführung der Heizfunktion mittels des äußeren Wärmeübertragers 5 als Wärmepumpenverdampfer strömt das mittels des Kältemittelverdichters 4 verdichtete Kältemittel über das geöffnete Absperrventil A3 zur Abgabe von Wärme an den in den Fahrgastinnenraum geführten Zuluftstrom L in den inneren Heizkondensators 8 oder Heizgaskühlers 8 und wird anschließend über das geöffnete Absperrventil A1 mittels des Expansionsventils AE3 in den äußeren Wärmeübertrager 5 zur Aufnahme von Wärme aus der Umgebungsluft entspannt und strömt anschließend über den Wärmepumpenrückführzweig 5.3 zurück zum Kältemittelverdichter 4. Die Expansionsventile AE1, AE2 und AE4 bleiben dabei geschlossen, ebenso wie das Absperrventil A5.

Eine indirekte Dreiecksschaltung wird dadurch realisiert, dass bei geöffnetem Absperrventil A1 das von dem Kältemittelverdichter 4 verdichtete Kältemittel mittels des Expansionsventils AE1 in den Chiller 3 entspannt wird, wobei gleichzeitig kühlmittelseitig, also in dem Kühlmittelkreislauf 3.0 kein Massenstrom erzeugt wird, also bspw. das als Kühlmittel verwendete Wasser auf der Kühlmittelseite des Chillers 3 stehen bleibt bzw. der Chiller 3 nicht aktiv von Kühlmittel durchströmt wird. Die Expansionsventile AE2, AE3 und AE4 bleiben bei dieser Schaltvariante geschlossen.

Bei einem Reheat-Betrieb wird der in den Fahrzeuginnenraum zugeführte Zuluftstrom mittels des Verdampfers 2 zunächst gekühlt und damit entfeuchtet, um anschließend mit der dem Zuluftstrom L entzogenen Wärme sowie der dem Kältemittel über den Verdichter 4 zugeführten Wärme mittels des inneren Heizkondensators 8 oder des Heizgaskühlers 8 diesen Zuluftstrom L zumindest teilweise wieder zu erwärmen. Hierzu sind in dem Klimagerät 1.1 zwischen dem Verdampfer 2 und dem Heizkondensator 8 bzw. Heizgaskühler 8 steuerbare und schwenkbare Temperaturklappen, in der Regel zwei Temperaturklappen, nämlich eine linke und eine rechte Temperaturklappe Tk1 und Tk2 (in Figur 1 schematisch dargestellt) angeordnet und zwischen einer Offenposition, die als 100%-Position bezeichnet wird, und einer Schließposition, die als 0%-Position bezeichnet wird, verschwenkbar. Alternativ besteht auch die Möglichkeit die Temperaturklappen Tk1 und Tk2 dem Heizregister nachzuschalten.

In der 100%-Position wird der gesamte den Verdampfer 2 durchströmende Zuluftstrom L über den Heizkondensator 8 bzw. Heizgaskühler 8 geführt und erwärmt, bevor dieser in den Fahrgastraum des Fahrzeugs strömen kann.

In der 0%-Position strömt der gesamte den Verdampfer 2 durchströmende Zuluftstrom L im Bypass um den Heizkondensator 8 bzw. Heizgaskühler 8 ohne Erwärmung und damit ohne Wärmeaufnahme in den Fahrgastraum.

In einer x-Position der Temperaturklappen Tk1 und Tk2 mit 0 % < x < 100 % sind diese Temperaturklappen nur teilweise geöffnet, so dass jeweils nur ein Teilluftstrom des den Verdampfer 2 durchströmenden Zuluftstroms L über den Heizkondensator 8 bzw. Heizgaskühler 8 geführt wird, um anschließend dem verbleibenden gekühlten und entfeuchteten Teilluftstrom beigemischt zu werden. Der in dieser Weise erwärmte Zuluftstrom L wird dem Fahrgastraum des Fahrzeugs zugeführt. So zeigt bspw. eine 50 %-Position an, dass die Temperaturklappe Tk1 oder Tk2 nur halb, also 50 % geöffnet ist.

Ein Reheat-Betrieb des Kältemittelkreislaufs 1 wird in Abhängigkeit der Wärmebilanz auf unterschiedliche Weise durchgeführt.

Bei einem Wärmeüberschuss im Reheat-Betrieb wird neben der Wärmeabgabe an die Zuluft des Fahrgastraums über den inneren Heizkondensator 8 oder Heizgaskühler 8 zusätzlich über den äußeren Wärmeübertrager 5 Wärme an die Umgebung des Fahrzeugs abgegeben, bevor das Kältemittel über den Verdampfer 2 wieder zurück zum Kältemittelverdichter 4 strömt. Hierzu wird das Nachheiz-Expansionsorgans AE4 in seine100%-Position gesteuert, also vollständig geöffnet, wobei das Druckniveau des Kältemittels zur Kondensation bzw. zur Kühlung das Drucklevel des Heizkondensators 8 oder Heizgaskühlers 8 annimmt. Anschließend wird das Kältemittel mittels des Expansionsventils AE2 in den Verdampfer 2 auf Niederdruck expandiert. Der Heizkondensator 8 oder Heizgaskühler 8 und der äußere Wärmeübertrager 5 bilden somit stromabwärts zum Kältemittelverdichter 4 die Hochdruckseite des Systems ab und arbeiten, abgesehen von Druckverlusten, auf derselben Drucklage, zumindest solange wie seitens Nachheizexpansionsorgan kein Regeleingriff in Richtung "Schließen" erfolgt.

Bei einem Wärmeüberschuss im Reheat-Betrieb wird der Nachheizbedarf bzw. die erforderliche Nachheizleistung am Heizkondensator 8 oder Heizgaskühler 8 mittels der Temperaturklappen Tk1 und Tk2 von einem die Kälteanlage 10 regelnden Steuergerät eingestellt.

Der x-Wert der Position der Temperaturklappen Tk1 und Tk2 zeigt damit als Klimaanlagenparameter die bspw. aus der Temperatureinstellung eines Fahrzeuginsassen ermittelte Nachheizleistung an. Befinden sich die Temperaturklappen Tk1 und Tk2 in der 0%-Position besteht kein Nachheizbedarf. Befinden sich dagegen die Temperaturklappen Tk1 und Tk2 in der 100%-Position besteht ein maximaler Nachheizbedarf.

In Abhängigkeit der x-Position der Temperaturklappen Tk1 und Tk2 wird der Öffnungsquerschnitt des Nachheiz-Expansionsorgans AE4 verkleinert bzw. geschlossen oder vergrößert bzw. geöffnet, d. h. es wird entweder angedrosselt oder entdrosselt.

Ferner wird in Abhängigkeit der x-Position der Temperaturklappen Tk1 und Tk2 das Nachheiz-Expansionsorgan AE4 derart angesteuert und geregelt, dass die Temperaturklappen Tk1 und Tk2 eine mittlere x-Position zwischen deren Offen- und Schließposition einnehmen. Hierzu wird ein Positionsbereich zwischen einer x₁-Position als obere Offenposition und einer x₂-Position als untere Offenposition mit x₂ < x₁ mit dem Ziel definiert, das Nachheiz-Expansionsorgan AE4 derart zu regeln, dass die Temperaturklappen Tk1 und Tk2 eine x-Position innerhalb dieses Positionsbereichs einnehmen. Der Positionsbereich kann bspw. mit x₁ = 60 % und x₂ = 40 % gewählt werden.

Der Vorteil dieser Vorgehensweise besteht darin, dass mit Temperaturklappen Tk1 und Tk2, deren Position sich innerhalb dieses Positionsbereichs befinden, eine dynamischere Anpassung an veränderte Temperaturbedingungen ermöglicht wird.

Zeigen die Temperaturklappen Tk1 und Tk2 bei einer großen x-Position einen hohen Nachheizbedarf an, wird das Nachheiz-Expansionsorgan AE4 in kleinen Schritten angedrosselt, d. h. der Öffnungsquerschnitt in kleinen Schritten verkleinert, wodurch sich im äußeren Wärmeübertrager 5 ein Mitteldruckniveau eingestellt und gleichzeitig im Heizkondensator 8 oder Heizgaskühler 8 der Hochdruck p_HD und damit auch die Kältemitteltemperatur ansteigt, d. h. die Nachheizleistung wird erhöht. Die Androsselung des Nachheiz-Expansionsorgans AE4 wird so lange fortgeführt, bis beide Temperaturklappen Tk1 und Tk2 in eine x-Position innerhalb des Positionsbereichs verschwenkt werden, also bspw. eine x-Position mit x < 60 % eingenommen haben.

Umgekehrt kann bei einem kleinen Nachheizbedarf (die Temperaturklappen Tk1 und Tk2 befinden sich in einer x-Position mit bspw. x < 40 %) die Entdrosselung des Nachheiz-Expansionsorgans AE4, also die Vergrößerung von dessen Öffnungsquerschnitt stufenweise solange vorgenommen werden und damit ein Absinken sowohl des Hochdrucks als auch der Temperatur im Heizkondensator 8 oder Heizgaskühler 8 erreicht werden, bis beide Temperaturklappen Tk1 und Tk2 so weit geöffnet werden, dass deren x-Positionen sich innerhalb des Positionsbereichs oder sogar dauerhaft unterhalb des Wertes x₂ befinden, d.h. es stellt sich ein sehr geringfügiger Nachheizbedarf ein.

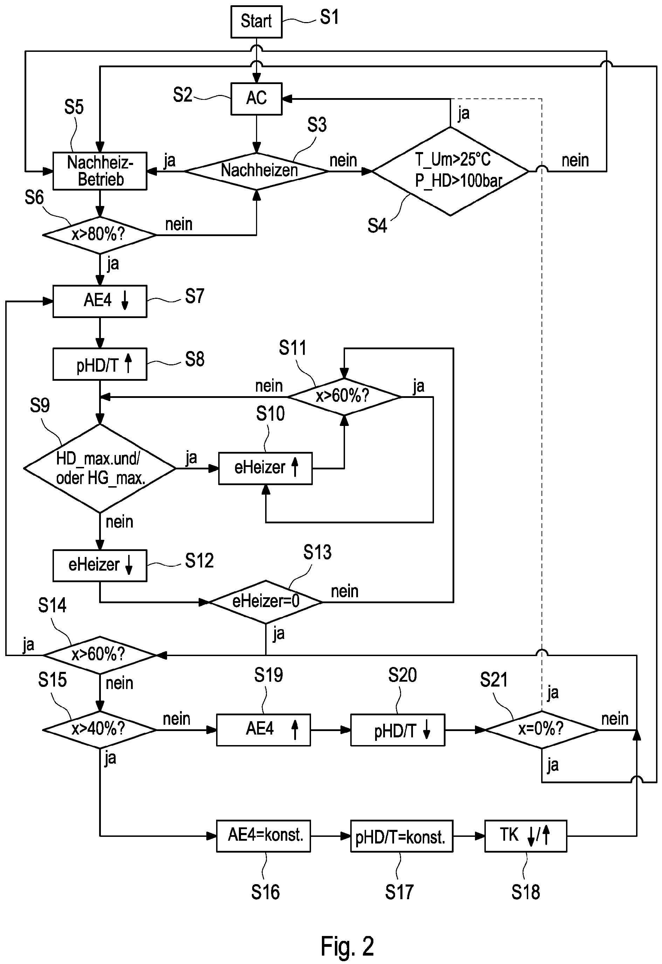

Im Detail wird dieser Reheat-Betrieb bei einem Wärmeüberschuss anhand des Ablaufdiagramms nach Figur 2 erläutert.

Nach dem Start der Kälteanlage 10 (Verfahrensschritt S1) wird diese in einen Kälteanlagen-Betrieb (AC-Betrieb) gesteuert (Verfahrensschritt S2). In einem nachfolgenden Verfahrensschritt S3 wird geprüft, ob ein Nachheizbedarf besteht. Falls kein Nachheizbedarf besteht wird auf einen Verfahrensschritt S4 verzweigt, mit welchem bei einer Umgebungstemperatur von größer als to von bspw. 25 °C oder bei einem Hochdruck p_HD des Kältemittelkreislaufs 1 von größer als p₀, dessen Wert bspw. auf 100 bar gesetzt werden kann, auf den Verfahrensschritt S2, oder falls dies nicht zutrifft, auf einen Verfahrensschritt S5 verzweigt.

Besteht gemäß des Verfahrensschrittes S3 ein Nachheizbedarf, wird gemäß Verfahrensschritt S5 der Kältemittelkreislauf 1 gemäß Figur 1 in den oben beschriebenen Reheat-Betrieb gesteuert, bei welchem das auf Hochdruck verdichtete Kältemittel über das Absperrventil A3 in den inneren Heizkondensator 8 oder Heizgaskühler 8 strömt und von dort über das Nachheiz-Expansionsorgan AE4 in den äußeren Wärmeübertrager 5 und von dort über den Verdampfer 2 den Akkumulator 7 und den inneren Wärmeübertrager 6 zurück zum Kältemittelverdichter 4 geleitet wird.

Im nachfolgenden Verfahrensschritt S6 wird geprüft, ob x > x₀, wobei x₀ gleichbedeutend mit der Ausgangsposition der Temperaturklappen ist mit einem Wert von bspw. 80 %, d. h. ob die Temperaturklappen Tk1 und Tk2 mehr als 80 % geöffnet sind, d. h. es wird geprüft, ob ein großer Nachheizbedarf besteht. Befinden sich die Temperaturklappen Tk1 und Tk2 in einer x-Position mit 80% < x ≤ 100% wird ein Verfahrensschritt S7 durchgeführt, andernfalls auf den Verfahrensschritt S3 zurückverzweigt.

Infolge des hohen Nachheizbedarfs für den Fall x > x₀ wird das Nachheiz-Expansionsorgan AE4 angedrosselt, d. h. dessen Öffnungsquerschnitt wird um einen vorgegebenen Betrag schrittweise und kontinuierlich unter Bildung eines Mitteldruck-Niveaus verkleinert. Dies bewirkt gemäß Verfahrensschritt S8 ein Ansteigen des Hochdrucks p_HD (pHD↑) im inneren Heizkondensator 8 oder Heizgaskühler 8 und damit auch ein Ansteigen der Temperatur T (T↑) des Kältemittels im Heizkondensator 8 oder Heizgaskühler 8.

Anschließend wird gemäß eines Verfahrensschrittes S9 geprüft, ob die Kälteanlage sich im Betriebspunkt maximaler Leistung befindet, d. h. ob der Hochdruck p_HD maximal (p_HD_max) und/oder die Temperatur T_HG des Heißgases maximal ist (T_HG_max). In diesem Betriebspunkt kann gemäß Verfahrensschritt S10 die Heizleistung nur mit dem elektrischen Heizelement 9 als Zuheizer erhöht werden.

Falls sich die Kälteanlage 10 in diesem Betriebspunkt maximaler Leistung befindet, wird gemäß Verfahrensschritt 10 das elektrische Heizelement 9 als Zuheizer zugeschaltet oder dessen Heizleistung um einen vorgegebenen Betrag erhöht um die geforderte Temperatur des Zuluftstroms für den Innenraum zu erreichen.

In einem anschließenden Verfahrensschritt S11 geprüft, ob x> x₁ ist, d. h. ob die Temperaturklappen Tk1 und Tk2 mehr als x₁ geöffnet sind und ob damit ein großer Nachheizbedarf besteht. Befinden sich die Temperaturklappen Tk1 und Tk2 in einer x-Position mit x₁< x ≤ 100% wird auf den Verfahrensschritt S10 zurückverzweigt, im anderen Fall wieder zurück zum Verfahrensschritt S9.

Falls die Bedingungen des Verfahrensschrittes S9 nicht zutreffen, also die Kälteanlage 10 weder einen maximalen Hochdruck p_HD_max noch eine maximale Heißgastemperatur T_HG_max aufweist, wird gemäß Verfahrensschritt S12 die elektrische Heizleistung des elektrischen Heizelementes 9 um einen vorgegebenen Betrag reduziert (eHeizer↓). In einem anschließenden Verfahrensschritt S13 wird geprüft, ob das elektrische Heizelement 9 keine Zuheizleistung mehr liefert, ob also gilt eHeizer = 0. Falls dies nicht zutrifft wird auf den Verfahrensschritt S11 zurückverzweigt.

Falls keine Zuheizleistung erzeugt wird, erfolgt mit einer Positionsprüfung der Temperaturklappen Tk1 und Tk2 gemäß Verfahrensschritt S14, ob diese mehr als x₁ geöffnet sind, d. h. ob x > x₁ ist und ob damit ein großer Nachheizbedarf besteht. Befinden sich die Temperaturklappen Tk1 und Tk2 in einer x-Position mit x₁ < x ≤ 100% wird auf den Verfahrensschritt S7 zurückverzweigt, im anderen Fall ein Verfahrensschritt S15 durchgeführt.

Mit dem Verfahrensschritt S15 geprüft, ob x > x₂ ist, d. h. ob die Temperaturklappen Tk1 und Tk2 mehr als x₂ geöffnet sind. Befinden sich die Temperaturklappen Tk1 und Tk2 in einer x-Position mit x₂ < x ≤ 100%, bedeutet dies unter Berücksichtigung des Verfahrensschrittes S14, dass sich die Temperaturklappen Tk1 und Tk2 in einer x-Position mit 40 % < x ≤ 60 % und damit innerhalb des definierten Positionsbereichs befinden. In diesem Fall wird mit dem nachfolgenden Verfahrensschritt S16 der Öffnungsquerschnitt des Nachheiz-Expansionsorgans AE4 konstant gehalten (AE4 = konstant) und somit bleibt auch der Hochdruck p_HD und somit auch die Kältemitteltemperatur im Heizkondensator oder Heizgaskühler 8 konstant (vgl. Verfahrensschritt S17, pHD/T = konstant). Aus diesen x-Positionen können entsprechend dem Nachheizbedarf die Temperaturklappen Tk1 und Tk2 verstellt, also entweder weiter geöffnet (Tk↑) oder weiter geschlossen (Tk↓) werden oder auch ihre Position beibehalten (Tk=const.). Anschließend wird wieder auf Verfahrensschritt S14 zurückverzweigt.

Falls gemäß Verfahrensschritt S15 die Temperaturklappen Tk1 und Tk2 bezüglich deren x-Positionen nicht die Bedingung x > x₂ erfüllen, d. h. also nur ein geringer Nachheizbedarf angezeigt wird, erfolgt mit dem nachfolgenden Verfahrensschritt S19 eine Entdrosselung des Nachheiz-Expansionsorgans AE4, indem dessen Öffnungsquerschnitt um einen bestimmten Betrag erhöht wird (AE4↑) erhöht wird, wodurch der Hochdruck und damit auch die Kältemitteltemperatur im Heizkondensator 8 und Heizgaskühler 8 absinkt (vgl. Verfahrensschritt S20, pHD/T↓).

In einem nachfolgenden Verfahrensschritt S21 wird geprüft, ob die Temperaturklappen Tk1 und Tk2 geschlossen sind, ob sie also eine x-Position mit x = 0 % eingenommen haben. Falls dies nicht zutrifft wird auf den Verfahrensschritt S14 zurückverzweigt.

Im anderen Fall, wenn also die Temperaturklappen Tk1 und Tk2 geschlossen sind, wird auf den Verfahrensschritt S5 zurückverzweigt und damit die Kälteanlage im Reheat-Betrieb, insbesondere bei System lasten mit einer Umgebungstemperatur von weniger als to betrieben. Alternativ kann auch auf den Verfahrensschritt S2 zurückverzweigt werden (dargestellt mit einer gestrichelten Linie), wenn hohe Systemlasten, bspw. bei einer Umgebungstemperatur von größer als to, bspw. von25 °C vorliegen.

Das erfindungsgemäße Verfahren gemäß Figur 2 zeigt, dass durch eine Variation des durch eine Androsselung oder Entdrosselung des Nachheiz-Expansionsorgans AE4 bewirkten Hochdrucks zwischen dem Kältemittelverdichter 4 und dem Nachheiz-Expansionsorgan AE4 auch als Heizmaßnahme eingesetzt werden kann, wobei bei diesem Verfahren der Chiller-Zweig 3.1 dem Verdampferzweig 2.1 parallel geschaltet werden kann, und somit auch die Abwärme des Chillers 3 über den inneren Heizkondensator 8 oder Heizgaskühler 8 zumindest teilweise auf den Zuluftstrom L des Fahrgastraums des Fahrzeugs übertragbar ist.

Auf die Darstellung mindestens eines weiteren optionalen, in der Regel parallel verschalteten Innenraumverdampfer (Heckverdampfer) für den Fondraum wird verzichtet

In dem beschriebenen Ausführungsbeispiel des erfindungsgemäßen Verfahrens wird als Kälteanlagenparameter die x-Position der Temperaturklappe oder die x-Positionen der Temperaturklappen verwendet.

Anstelle der Position der Temperaturklappe als die erforderliche Nachheizleistung anzeigenden Kälteanlagenparameter können auch folgende Kälteanlagenparameter verwendet werden.

So ist der Sollwert der Ausblastemperatur an mindestens einem Ausströmer des Klimagerätes, welcher von einem Steuergerät der Kälteanlage bereitgestellt wird als Klimaanlagenparameter geeignet. Dieser Sollwert stellt eine direkte Stellgröße für den Hochdruck und damit auch für die Solltemperatur am inneren Heizkondensator 8 oder Heizgaskühler 8 dar. Mit einem Messmittel, bspw. einem Temperatursensor wird der Istwert der Ausblastemperatur bestimmt.

Mit einem solchen Sollwert der Ausblastemperatur als Klimaanlagenparameter wird
- ein Temperaturschwellwert mit einem Toleranzband für den Sollwert der Ausblastemperatur bestimmt,
- bei einem Istwert der Ausblastemperatur größer als der größte Wert des Toleranzbandes der Öffnungsquerschnitt des Nachheiz-Expansionsorgans vergrößert, und
- bei einem Istwert der Ausblastemperatur kleiner als der kleinste Wert des Toleranzbandes der Öffnungsquerschnitt des Nachheiz-Expansionsorgans verkleinert.

Ein Klimagerät weist wenigstens einen Ausströmer auf, dessen Ausströmer-Querschnitt mittels einer verstellbaren Ausströmer-Klappe einstellbar ist. So kann die Position einer solchen Ausströmer-Klappe ebenso als Klimaanlagenparameter verwendet werden. Als Ausströmer sind die sogenannten Mannanströmer, Fußraumanströmer und Defrosteranströmer geeignet.

Zur Durchführung des entsprechenden Verfahrens wird
- für die Ausströmer-Klappe zur Definition eines Positionsbereichs eine obere Offenposition (x₁-Position) und eine untere Offenposition (x₂-Position, x₂ < x₁) vorgegeben,
- bei einer x-Position der Ausströmer-Klappe mit x > x₁ der Öffnungsquerschnitt des Nachheiz-Expansionsorgans vergrößert, und
- bei einer x-Position der Ausströmer-Klappe mit x < x₂ der Öffnungsquerschnitt des Nachheiz-Expansionsorgans verkleinert.

Eine weitere Alternative zur Verwendung der Position der Temperaturklappe als Klimaanlagenparameter besteht darin, dass ein Sollwert für die Lufttemperatur der den inneren Heizkondensator oder Heizgaskühler durchströmenden und der an diesem austretenden Luft von einem Steuergerät der Kälteanlage bestimmt wird und dieser Sollwert der Lufttemperatur der den inneren Heizkondensator oder Heizgaskühler durchströmenden der an diesem austretenden Luft als Klimaanlagenparameter verwendet wird. Mit mindestens einem Messmittel, bspw. ein Temperatursensor wird der Istwert dieser Lufttemperatur ermittelt.

Hierzu wird
- ein Temperaturschwellwert mit einem Toleranzband für den Sollwert der Lufttemperatur der den inneren Heizkondensator oder Heizgaskühler durchströmenden und austretenden Luft bestimmt,
- bei einem Istwert der Lufttemperatur größer als der größte Wert des Toleranzbandes der Öffnungsquerschnitt des Nachheiz-Expansionsorgans vergrößert, und
- bei einem Istwert der Lufttemperatur kleiner als der kleinste Wert des Toleranzbandes der Öffnungsquerschnitt des Nachheiz-Expansionsorgans verkleinert.

Eine weitere Alternative zur Verwendung der Position der Temperaturklappe als Klimaanlagenparameter besteht darin, dass
- die Kältemitteleintrittstemperatur des Kältemittels am Kältemitteleintritt des inneren Heizkondensators oder Heizgaskühlers mittels eines Kältemitteleintritts-Temperatursensors gemessen wird, und
- der Wert der gemessenen Kältemitteleintrittstemperatur als Klimaanlagenparameter verwendet wird.

Hierzu wird
- ein Temperaturschwellwert mit einem Toleranzband für den Wert der Kältemitteleintrittstemperatur bestimmt,
- bei einem Wert der Kältemitteleintrittstemperatur größer als der größte Wert des Toleranzbandes der Öffnungsquerschnitt des Nachheiz-Expansionsorgans vergrößert, und
- bei einem Wert der Kältemitteleintrittstemperatur kleiner als der kleinste Wert des Toleranzbandes der Öffnungsquerschnitt des Nachheiz-Expansionsorgans verkleinert.

Schließlich besteht eine weitere Alternative zur Verwendung der Position der Temperaturklappe als Klimaanlagenparameter darin, dass
- der Hochdruck am inneren Heizkondensator oder Heizgaskühler mittels eines Drucksensors gemessen wird, und
- der Druckwert des Hochdrucks als Klimaanlagenparameter verwendet wird.

Hierzu wird
- ein Druckschwellwert mit einem Toleranzband für den Druckwert des Hochdrucks am inneren Heizkondensator oder Heizgaskühler bestimmt,
- bei einem Druckwert größer als der größte Wert des Toleranzbandes der Öffnungsquerschnitt des Nachheiz-Expansionsorgans vergrößert, und
- bei einem Druckwert kleiner als der kleinste Wert des Toleranzbandes der Öffnungsquerschnitt des Nachheiz-Expansionsorgans verkleinert.

Das erfindungsgemäße Verfahren gemäß des Ausführungsbeispieles nach Figur 2 kann mit einer einzigen Temperaturklappe Tk1 oder mit zwei Temperaturklappen Tk1 und Tk2 oder alternativ auch mit mehr als zwei Temperaturklappen Tkn mit n ≥ 1 durchgeführt werden

Alternativ ist es bei einem Klimagerät mit zwei Temperaturklappen möglich, die x-Positionen der Temperaturklappen zu mitteln und den Mittelwert *x̅* auf den Positionsbereich mit der oberen Offenposition als x₁-Position und der unteren Offenposition als x₂-Position zu regeln.

Bei x-Positionen der Temperaturklappen mit *x̅* > x₁ wird der Öffnungsquerschnitt des Nachheiz-Expansionsorgans AE4 verkleinert, während bei x-Positionen der Temperaturklappe mit *x̅* < x₂ der Öffnungsquerschnitt des Nachheiz-Expansionsorgans vergrößert wird.

Eine weitere Alternative bei einem Klimagerät mit zwei Temperaturklappen besteht darin, dass
- die Temperaturklappe mit der größten Offenposition bestimmt wird,
- bei einer x-Position dieser Temperaturklappe mit x > x₁ der Öffnungsquerschnitt des Nachheiz-Expansionsorgans verkleinert wird, und
- bei einer x-Position der Temperaturklappe mit x < x₂ der Öffnungsquerschnitt des Nachheiz-Expansionsorgans vergrößert wird.

Hierbei beziehen sich die Werte x₁ und x₂ auf den Positionsbereich, in welchen die Temperaturklappe mit der größten Offenposition geregelt wird.

Die zweite Temperaturklappe kann in diesem Fall solange unbeachtet arbeiten, bis zu dem Zeitpunkt, zu welchem diese zweite Temperaturklappe die größere Öffnungsposition aufweist und ihrerseits damit zur Führungsgröße wird. Allgemein formuliert findet eine Maximalwertabfrage unter den x-Positionen der mindestens zwei Temperaturklappen statt, wobei immer der jeweils resultierende Maximalwert den Regelablauf beeinflusst und jeder weitere Wert unbeachtet bleibt.

Bei Klimageräten mit nur einer Temperaturklappe beschränkt sich deren Positionsbewertung auf einen einzigen x-Wert, für den das oben beschriebene erfindungsgemäße Verfahren durchgeführt wird. Sind mehr als zwei Temperaturklappen in einem Klimagerät vorhanden, wird das oben beschriebenen erfindungsgemäße Verfahren funktional entsprechend erweitert.

Bei ausreichender Heizleistung im Kältemittelkreislauf 1, insbesondere jedoch am Heizkondensator 8 oder Heizgaskühler 8 wird nur der Verdampfer 2 mit Kältemittel durchströmt, indem der Heizkondensator 8 oder Heizgaskühler 8 stromabwärtsseitig mittels des geöffneten Absperrorgans A1 über das Expansionsventil AE2 mit dem Verdampfer 2 fluidverbunden wird, wobei das dem Chiller 3 zugeordnete Expansionsventil AE1 und ebenso wie die zum äußeren Wärmeübertrager 5 führenden Expansionsventile AE3 und AE4 gesperrt sind. Aus dem Verdampfer 2 strömt das Kältemittel über das Rückschlagventil R1, über den Akkumulator 7 und den inneren Wärmeübertrager 6 wieder zurück zum Kältemittelverdichter 4, wobei die in dem Verdampfer 2 aufgenommene Wärme gemeinsam mit dem über den Kältemittelverdichter 4 eingetragenen Wärmestrom über den Heizkondensator 8 oder Heizgaskühler 8 wieder an einen in das Fahrzeuginnere geführten Zuluftstrom L abgegeben wird.

Bei einem Wärmemangel im Kältemittelkreislauf 1, d.h. bei einem Heizleistungsdefizit am Heizkondensator 8 bzw. Heizgaskühler 8, wird zur Wärmeaufnahme zusätzlich zum Verdampfer 2 auch der Chiller 3 durch Öffnen des Expansionsventils AE1 und/oder der äußere Wärmeübertrager 5 mittels des Expansionsorgans AE3 parallel geschaltet.

Auch ist eine parallele Nutzung der Abwärme aus dem Chiller 3 als auch der Umgebungswärme mittels des äußeren Wärmeübertragers 5 möglich.

Der Zweig mit dem Absperrventil A5 dient als Absaugzweig 5.4, um über diesen im AC-Betrieb des Kältemittelkreislaufs 1 gemäß Figur 1 bei geöffnetem Absperrventil A5 und geschlossenen Absperrventilen A1 und A3 Kältemittel aus dem Heizzweig 8.1 abzusaugen. Für Heizmaßnahmen, bei denen der Heizkondensator 8 oder Heizgaskühler 8 stets aktiv durchströmt wird, bleibt das Absperrventil A5 stets geschlossen.

### BEZUGSZEICHEN

- 1: Kältemittelkreislauf der Kälteanlage 10
- 1.1: Klimagerät

- 2: Verdampfer
- 2.1: Innenraum-Verdampferzweig

- 3: Chiller
- 3.0: Kühlmittelkreislauf des Chillers 3
- 3.1: Chillerzweig

- 4: Kältemittelverdichter
- 5: äußerer Wärmeübertrager
- 5.1: AC-und Wärmepumpenzweig
- 5.2: Reheat-Zweig
- 5.3: Wärmepumpenrückführzweig
- 5.4: Absaugzweig

- 6: innerer Wärmeübertrager
- 7: Akkumulator
- 8: innerer Heizkondensator oder Heizgaskühler
- 8.1: Heizzweig
- 9: elektrisches Heizelement
- 10: Kälteanlage

- A1: erstes Absperrorgan
- A2: zweites Absperrorgan
- A3: drittes Absperrorgan
- A4: viertes Absperrorgan
- A5: fünftes Absperrorgan

- Ab1: Abzweigpunkt
- Ab2: Abzweigpunkt
- Ab3: Abzweigpunkt

- AE1: Expansionsventil
- AE2: Expansionsventil
- AE3: Expansionsventil
- AE4: Nachheiz-Expansionsorgan

- L: Zuluftstrom

- pT1: erster Druck-Temperatursensor
- pT2: zweiter Druck-Temperatursensor
- pT3: dritter Druck-Temperatursensor
- pT4: vierter Druck-Temperatursensor
- pT5: fünfter Druck-Temperatursensor

- R1: Rückschlagventil
- R2: Rückschlagventil

## Patentansprüche

1. Verfahren zum Betreiben einer Kälteanlage (10) für ein Fahrzeug mit einem eine Wärmepumpenfunktion aufweisenden Kältemittelkreislauf (1), indem
- der Kältemittelkreislauf (1) mit einem äußeren Wärmeübertrager (5) ausgebildet wird, welcher entweder zur Durchführung eines Kälteanlagenbetriebs als Kondensator oder Gaskühler oder zur Durchführung eines Wärmepumpenbetriebs als Wärmepumpen-Verdampfer betrieben wird,
- der Kältemittelkreislauf (1) mit einem Verdampfer (2) und einem inneren Heizkondensator (8) oder Heizgaskühler (8) zur Durchführung eines Heizbetriebs ausgebildet wird, **dadurch gekennzeichnet, dass**
- der innere Heizkondensator (8) oder Heizgaskühler (8) zur Durchführung eines Nachheiz-Betrieb stromabwärts über ein Nachheiz-Expansionsorgan (AE4) mit dem äußeren Wärmeübertrager (5) fluidverbunden wird, wobei
- in Abhängigkeit eines die erforderliche Nachheizleistung anzeigenden Kälteanlagenparameters der Öffnungsquerschnitt des Nachheiz-Expansionsorgan (AE4) gesteuert wird.

2. Verfahren nach Anspruch 1, bei welchem
- die Kälteanlage (10) mit einem den Verdampfer (2) und den inneren Heizkondensator (8) oder Heizgaskühler (8) aufnehmenden Klimagerät (1.1) mit wenigstens einer zwischen einer Offen- und Schließposition schwenkbaren Temperaturklappe (Tk1, Tk2) bereitgestellt wird, wobei in Abhängigkeit der Position der Temperaturklappe (Tk1, Tk2) zumindest ein Teilluftstrom des den Verdampfer (2) durchströmenden Zuluftstroms (L) über den inneren Heizkondensator (8) oder Heizgaskühler (8) geleitet wird oder der innere Heizkondensator (8) der Heizgaskühler (8) im Bypass von dem Zuluftstrom (L) vollständig umströmt wird, und
- die Position der Temperaturklappe (Tk1, Tk2) als Klimaanlagenparameter verwendet wird.

3. Verfahren nach Anspruch 2, bei welchem
- für die Temperaturklappe (Tk1, Tk2) zur Definition eines Positionsbereichs eine obere Offenposition (x₁-Position) und eine untere Offenposition (x₂-Position, x₂ < x₁) vorgegeben wird,
- bei einer x-Position der Temperaturklappe (Tk1, Tk2) mit x > x₁ der Öffnungsquerschnitt des Nachheiz-Expansionsorgans (AE4) verkleinert wird, und
- bei einer x-Position der Temperaturklappe (Tk1, Tk2) mit x < x₂ der Öffnungsquerschnitt des Nachheiz-Expansionsorgans (AE4) vergrößert wird.

4. Verfahren nach einem der Ansprüche 2 oder 3, bei welchem
- das Klimagerät (1.1) mit einer ersten und zweiten Temperaturklappe (Tk1, Tk2) ausgebildet wird,
- der Mittelwert (*x̅*) der x-Positionen der beiden Temperaturklappen (Tk1, Tk2) gebildet wird,
- bei einem Mittelwert *x̅* der x-Positionen der Temperaturklappen (Tk1, Tk2) mit *x̅* > x₁ der Öffnungsquerschnitt des Nachheiz-Expansionsorgans (AE4) verkleinert wird, und
- bei einem Mittelwert *x̅* der x-Positionen der Temperaturklappen (Tk1, Tk2) mit *x̅* < x₂ der Öffnungsquerschnitt des Nachheiz-Expansionsorgans (AE4) vergrößert wird.

5. Verfahren nach einem der Ansprüche 2 oder 3, bei welchem
- die Temperaturklappe (Tk1, Tk2) mit der größten Offenposition bestimmt wird,
- bei einer x-Position der Temperaturklappe (Tk1, Tk2) mit x > x₁ der Öffnungsquerschnitt des Nachheiz-Expansionsorgans (AE4) verkleinert wird, und
- bei einer x-Position der Temperaturklappe mit x < x₂ der Öffnungsquerschnitt des Nachheiz-Expansionsorgans (AE4) vergrößert wird.

6. Verfahren nach Anspruch 1, bei welchem
- die Kälteanlage (10) mit einem den Verdampfer (2) und den inneren Heizkondensator (8) oder Heizgaskühler (8) aufnehmenden Klimagerät (1.1), einem Steuergerät, mit welchem ein Sollwert für eine Ausblastemperatur an einem Ausströmer des Klimagerätes (1.1) bereitgestellt wird, und einem Messmittel, mit welchem ein Istwert der Ausblastemperatur an dem Ausströmer des Klimagerätes erfasst wird, und
- der Sollwert der Ausblastemperatur als Klimaanlagenparameter verwendet wird.

7. Verfahren nach Anspruch 6, bei welchem
- ein Temperaturschwellwert mit einem Toleranzband für den Sollwert der Ausblastemperatur bestimmt wird,
- bei einem Istwert der Ausblastemperatur größer als der größte Wert des Toleranzbandes der Öffnungsquerschnitt des Nachheiz-Expansionsorgans vergrößert wird, und
- bei einem Istwert der Ausblastemperatur kleiner als der kleinste Wert des Toleranzbandes der Öffnungsquerschnitt des Nachheiz-Expansionsorgans verkleinert wird.

8. Verfahren nach Anspruch 1, bei welchem
- die Kälteanlage (10) mit einem den Verdampfer (2) und den inneren Heizkondensator (8) oder Heizgaskühler (8) aufnehmenden Klimagerät (1.1) mit wenigstens einem Ausströmer bereitgestellt wird, wobei mittels
einer verstellbaren Ausströmer-Klappe der Ausströmer-Querschnitt einstellbar ist, und
- die Position der Ausströmer-Klappe als Klimaanlagenparameter verwendet wird.

9. Verfahren nach Anspruch 8, bei welchem
- für die Ausströmer-Klappe zur Definition eines Positionsbereichs eine obere Offenposition (x₁-Position) und eine untere Offenposition (x₂-Position, x₂ < x₁) vorgegeben wird,
- bei einer x-Position der Ausströmer-Klappe mit x > x₁ der Öffnungsquerschnitt des Nachheiz-Expansionsorgans (AE4) vergrößert wird, und
- bei einer x-Position der Ausströmer-Klappe mit x < x₂ der Öffnungsquerschnitt des Nachheiz-Expansionsorgans (AE4) verkleinert wird.

10. Verfahren nach Anspruch 1, bei welchem
- die Kälteanlage (10) mit einem den Verdampfer (2) und den inneren Heizkondensator (8) oder Heizgaskühler (8) aufnehmenden Klimagerät (1.1), einem Steuergerät, mit welchem ein Sollwert für die Lufttemperatur der den inneren Heizkondensator (8) oder Heizgaskühler (8) durchströmenden und der aus diesem austretenden Luft bestimmt wird, und einem Messmittel ausgebildet wird, mit welchem ein Istwert der Lufttemperatur erfasst wird, und
- der Sollwert der Lufttemperatur der den inneren Heizkondensator (8) oder Heizgaskühler (8) durchströmenden und der an diesem austretenden Luft als Klimaanlagenparameter verwendet wird.

11. Verfahren nach Anspruch 10, bei welchem
- ein Temperaturschwellwert mit einem Toleranzband für den Sollwert der Lufttemperatur der den inneren Heizkondensator (8) oder Heizgaskühler (8) durchströmenden und austretenden Luft bestimmt wird,
- bei einem Istwert der Lufttemperatur größer als der größte Wert des Toleranzbandes der Öffnungsquerschnitt des Nachheiz-Expansionsorgans (A E4) vergrößert wird, und
- bei einem Istwert der Lufttemperatur kleiner als der kleinste Wert des Toleranzbandes der Öffnungsquerschnitt des Nachheiz-Expansionsorgans (AE4) verkleinert wird.

12. Verfahren nach Anspruch 1, bei welchem
- die Kältemitteleintrittstemperatur des Kältemittels am Kältemitteleintritt des inneren Heizkondensators (8) oder Heizgaskühlers (8) mittels eines Kältemitteleintritts-Temperatursensors gemessen wird, und
- der Wert der gemessenen Kältemitteleintrittstemperatur als Klimaanlagenparameter verwendet wird.

13. Verfahren nach Anspruch 12, bei welchem
- ein Temperaturschwellwert mit einem Toleranzband für den Wert der Kältemitteleintrittstemperatur bestimmt wird,
- bei einem Wert der Kältemitteleintrittstemperatur größer als der größte Wert des Toleranzbandes der Öffnungsquerschnitt des Nachheiz-Expansionsorgans (AE4) vergrößert wird, und
- bei einem Wert der Kältemitteleintrittstemperatur kleiner als der kleinste Wert des Toleranzbandes der Öffnungsquerschnitt des Nachheiz-Expansionsorgans (AE4) verkleinert wird.

14. Verfahren nach Anspruch 1, bei welchem
- der Hochdruck am inneren Heizkondensator (8) oder Heizgaskühler (8) mittels eines Drucksensors gemessen wird, und
- der Druckwert des Hochdrucks als Klimaanlagenparameter verwendet wird.

15. Verfahren nach Anspruch 14, bei welchem
- ein Druckschwellwert mit einem Toleranzband für den Druckwert des Hochdrucks am inneren Heizkondensator (8) oder Heizgaskühler (8) bestimmt wird,
- bei einem Druckwert größer als der größte Wert des Toleranzbandes der Öffnungsquerschnitt des Nachheiz-Expansionsorgans (AE4) vergrößert wird, und
- bei einem Druckwert kleiner als der kleinste Wert des Toleranzbandes der Öffnungsquerschnitt des Nachheiz-Expansionsorgans (AE4) verkleinert wird.

16. Verfahren nach einem der vorhergehenden Ansprüche, bei welchem
- die Querschnittöffnung des Nachheiz-Expansionsorgans (AE4) derart dimensioniert wird, dass bei einer minimalen Querschnittsöffnung das Nachheiz-Expansionsorgan (AE4) geschlossen wird, und
- bei einer maximalen Querschnittöffnung eine Fläche freigegeben wird, die den Querschnittsflächen der Klimaanleitungen des Kältemittelkreislaufs (1) stromaufwärts und stromabwärts des Nachheiz-Expansionsorgans (AE4) entspricht.

## Claims

1. Method for operating a refrigeration system (10) for a vehicle, having a refrigerant circuit (1) which has a heat pump function, in which
- the refrigerant circuit (1) is designed with an exterior heat exchanger (5) which is either operated as a condenser or gas cooler in order to perform a refrigeration system mode or as a heat-pump evaporator in order to perform a heat pump mode,
- the refrigerant circuit (1) is designed with an evaporator (2) and an interior heating condenser (8) or heating gas cooler (8) for performing a heating mode, **characterised in that**
- the interior heating condenser (8) or heating gas cooler (8) is fluidly connected to the exterior heat exchanger (5), downstream, by means of a post-heating expansion device (AE4) in order to perform a post-heating mode, wherein
- the opening cross-section of the post-heating expansion device (AE4) is controlled in accordance with a refrigeration system parameter indicating the required post-heating power.

2. Method according to claim 1, in which
- the refrigeration system (10) is provided with an air conditioner (1.1) which accommodates the evaporator (2) and the interior heating condenser (8) or heating gas cooler (8) and has at least one temperature flap (Tk1, Tk2) that can be pivoted between an open and closed position, wherein, in accordance with the position of the temperature flap (Tk1, Tk2), at least a partial air flow of the supply air flow (L) flowing through the evaporator (2) is passed over the interior heating condenser (8) or heating gas cooler (8), or the supply air flow (L) flows completely around the interior heating condenser (8) or heating gas cooler (8) in a bypass, and
- the position of the temperature flap (Tk1, Tk2) is used as an air conditioning parameter.

3. Method according to claim 2, in which
- an upper open position (x1 position) and a lower open position (x2 position, x2 < x1) are specified for the temperature flap (Tk1, Tk2) in order to define a position range,
- for an x position of the temperature flap (Tk1, Tk2) with x > x1, the opening cross-section of the post-heating expansion device (AE4) is reduced, and
- for an x position of the temperature flap (Tk1, Tk2) with x < x2, the opening cross-section of the post-heating expansion device (AE4) is enlarged.

4. Method according to any of claims 2 or 3, in which
- the air conditioner (1.1) is designed with a first and second temperature flap (Tk1, Tk2),
- the average value (*x̅*) of the x positions of the two temperature flaps (Tk1, Tk2) is formed,
- at an average value *x̅* of the x positions of the temperature flaps (Tk1, Tk2) with *x̅* > x1, the opening cross-section of the post-heating expansion device (AE4) is reduced, and
- at an average value *x̅* of the x positions of the temperature flaps (Tk1, Tk2) with *x̅* < x2, the opening cross-section of the post-heating expansion device (AE4) is enlarged.

5. Method according to any of claims 2 or 3, in which
- the temperature flap (Tk1, Tk2) with the largest open position is determined,
- for an x position of the temperature flap (Tk1, Tk2) with x > x1, the opening cross-section of the post-heating expansion device (AE4) is reduced, and
- for an x position of the temperature flap with x < x2, the opening cross-section of the post-heating expansion device (AE4) is enlarged.

6. Method according to claim 1, in which
- the refrigeration system (10) with an air conditioner (1.1) which accommodates the evaporator (2) and the interior heating condenser (8) or heating gas cooler (8),
- a control device, with which a target value for an outlet temperature at a vent of the air conditioner (1.1) is provided, and a measuring means with which an actual value of the outlet temperature at the vent of the air conditioner is detected, and
- the target value of the outlet temperature is used as an air conditioning parameter.

7. Method according to claim 6, in which
- a temperature threshold value with a tolerance band is determined for the target value for the outlet temperature,
- if the actual value of the outlet temperature is larger than the largest value of the tolerance band, the opening cross-section of the post-heating expansion device is enlarged, and
- if the actual value of the outlet temperature is smaller than the smallest value of the tolerance band, the opening cross-section of the post-heating expansion device is reduced.

8. Method according to claim 1, in which
- the refrigeration system (10) is provided with an air conditioner (1.1) with at least one vent, which air conditioner accommodates an evaporator (2) and the interior heating condenser (8) or heating gas cooler (8),
wherein the cross section of the vent is adjustable by means of an adjustable vent flap, and
- the position of the vent flap is used as an air conditioning parameter.

9. Method according to claim 8, in which
- an upper open position (x1 position) and a lower open position (x2 position, x2 < x1) are specified for the vent flap in order to define a position range,
- for an x position of the vent flap with x > x1, the opening cross-section of the post-heating expansion device (AE4) is enlarged, and
- for an x position of the vent flap with x < x2, the opening cross-section of the post-heating expansion device (AE4) is reduced.

10. Method according to claim 1, in which
- the refrigeration system (10) is designed with an air conditioner (1.1) which accommodates the evaporator (2) and the interior heating condenser (8) or heating gas cooler (8), a control device with which a target value is determined for the air temperature of the air flowing through the interior heating condenser (8) or heating gas cooler (8) and of the air exiting from it, and a measuring means with which an actual value of the air temperature is detected, and
- the target value of the air temperature of the air flowing through the interior heating condenser (8) or heating gas cooler (8) and of the air exiting from it, is used as an air conditioning system parameter.

11. Method according to claim 10, in which
- a temperature threshold value with a tolerance band is determined for the target value of the air temperature of the air flowing through and exiting the interior heating condenser (8) or heating gas cooler (8),
- for an actual value of the air temperature larger than the largest value of the tolerance band, the opening cross-section of the post-heating expansion device (AE4) is enlarged, and
- for an actual value of the air temperature smaller than the smallest value of the tolerance band, the opening cross-section of the post-heating expansion device (AE4) is reduced.

12. Method according to claim 1, in which
- the refrigerant inlet temperature of the refrigerant at the refrigerant inlet of the interior heating condenser (8) or heating gas cooler (8) is measured by a refrigerant inlet temperature sensor, and
- the value of the measured refrigerant inlet temperature is used as an air conditioning system parameter.

13. Method according to claim 12, in which
- a temperature threshold value with a tolerance band is determined for the value of the refrigerant inlet temperature,
- for a value of the refrigerant inlet temperature larger than the largest value of the tolerance band, the opening cross-section of the post-heating expansion device (AE4) is enlarged, and
- for a value of the refrigerant inlet temperature smaller than the smallest value of the tolerance band, the opening cross-section of the post-heating expansion device (AE4) is reduced.

14. Method according to claim 1, in which
- the high pressure at the interior heating condenser (8) or heating gas cooler (8) is measured by a pressure sensor, and
- the pressure value of the high pressure is used as an air conditioning parameter.

15. Method according to claim 14, in which
- a pressure threshold value with a tolerance band is determined for the pressure value of the high pressure at the interior heating condenser (8) or heating gas cooler (8),
- for a pressure value larger than the largest value of the tolerance band, the opening cross-section of the post-heating expansion device (AE4) is enlarged, and
- for a pressure value smaller than the smallest value of the tolerance band, the opening cross-section of the post-heating expansion device (AE4) is reduced.

16. Method according to any of the preceding claims, in which
- the cross-sectional opening of the post-heating expansion device (AE4) is dimensioned such that the post-heating expansion device (AE4) is closed for a minimum cross-sectional opening, and
- for a maximum cross-sectional opening, an area is released which corresponds to the cross-sectional areas of the air conditioning ducts of the refrigerant circuit (1) upstream and downstream of the post-heating expansion device (AE4).

## Revendications

1. Procédé de fonctionnement d'une installation frigorifique (10) pour un véhicule avec un circuit de réfrigérant (1) présentant une fonction de pompe à chaleur, en ce que
- le circuit de réfrigérant (1) est réalisé avec un échangeur de chaleur (5) extérieur qui fonctionne pour la réalisation d'un fonctionnement d'installation frigorifique comme condensateur ou refroidisseur de gaz ou pour la réalisation d'un fonctionnement de pompe à chaleur comme évaporateur de pompe à chaleur,
- le circuit de réfrigérant (1) est réalisé avec un évaporateur (2) et un condensateur de chauffage (8) intérieur ou refroidisseur de gaz de chauffage (8) pour la réalisation d'un fonctionnement de chauffage, **caractérisé en ce que**
- le condensateur de chauffage (8) intérieur ou refroidisseur de gaz de chauffage (8) est relié de manière fluide pour la réalisation d'un fonctionnement de chauffage ultérieur en aval par le biais d'un organe d'expansion de chauffage ultérieur (AE4) à l'échangeur de chaleur (5) extérieur, dans lequel
- la section transversale d'ouverture de l'organe d'expansion de chauffage ultérieur (AE4) est commandée en fonction d'un paramètre d'installation frigorifique montrant la puissance de chauffage ultérieur nécessaire.

2. Procédé selon la revendication 1, pour lequel
- l'installation frigorifique (10) est fournie avec un appareil de climatisation (1.1) recevant l'évaporateur (2) et le condensateur de chauffage (8) intérieur ou refroidisseur de gaz de chauffage (8) avec au moins un clapet de température (Tk1, Tk2) pivotant entre une position ouverte et fermée, dans lequel en fonction de la position des clapets de température (Tk1, Tk2), au moins un courant d'air partiel du courant d'amenée d'air (L) traversant l'évaporateur (2) est acheminé par le biais du condensateur de chauffage (8) intérieur ou refroidisseur de gaz de chauffage (8) ou le condensateur de chauffage (8) intérieur ou refroidisseur de gaz de chauffage (8) est complètement contourné en dérivation du courant d'amenée d'air (L), et
- la position des clapets de température (Tk1, Tk2) est utilisée comme paramètre d'installation de climatisation.

3. Procédé selon la revendication 2, pour lequel
- pour le clapet de température (Tk1, Tk2) pour la définition d'une zone de position, une position ouverte supérieure (position x1) et une position ouverte inférieure (position x2, x2 < x1) sont prédéfinies,
- pour une position x des clapets de température (Tk1, Tk2) avec x > x1, la section transversale d'ouverture de l'organe d'expansion de chauffage ultérieur (AE4) est réduite, et
- pour une position x des clapets de température (Tk1, Tk2) avec x < x2, la section transversale d'ouverture de l'organe d'expansion de chauffage ultérieur (AE4) est agrandie.

4. Procédé selon l'une quelconque des revendications 2 ou 3, pour lequel
- l'appareil de climatisation (1.1) est réalisé avec un premier et second clapet de température (Tk1, Tk2),
- la valeur médiane (*x̅*) des positions x des deux clapets de température (Tk1, Tk2) est formée,
- pour une valeur médiane x̅ des positions x des clapets de température (Tk1, Tk2) avec x̅ > x1, la section transversale d'ouverture de l'organe d'expansion de chauffage ultérieur (AE4) est réduite, et
- pour une valeur médiane x̅ des positions x des clapets de température (Tk1, Tk2) avec x̅ < x2, la section transversale d'ouverture de l'organe d'expansion de chauffage ultérieur (AE4) est agrandie.

5. Procédé selon l'une quelconque des revendications 2 ou 3, pour lequel
- le clapet de température (Tk1, Tk2) est déterminé avec la position ouverte la plus grande,
- pour une position x des clapets de température (Tk1, Tk2) avec x > x1, la section transversale d'ouverture de l'organe d'expansion de chauffage ultérieur (AE4) est réduite, et
- pour une position x des clapets de température avec x < x2, la section transversale d'ouverture de l'organe d'expansion de chauffage ultérieur (AE4) est agrandie.

6. Procédé selon la revendication 1, pour lequel
- l'installation frigorifique (10) avec un appareil de climatisation (1.1) recevant l'évaporateur (2) et le condensateur de chauffage (8) intérieur ou refroidisseur de gaz de chauffage (8), un appareil de commande, avec lequel une valeur de consigne pour une température de soufflage est fournie à un diffuseur de l'appareil de climatisation (1.1), et un moyen de mesure, avec lequel une valeur réelle de la température de soufflage est détectée au niveau du diffuseur de l'appareil de climatisation, et
- la valeur de consigne de la température de soufflage est utilisée comme paramètre d'installation de climatisation.

7. Procédé selon la revendication 6, pour lequel
- une valeur seuil de température avec une bande de tolérance pour la valeur de consigne de la température de soufflage est déterminée,
- pour une valeur réelle de la température de soufflage supérieure à la valeur la plus grande de la bande de tolérance, la section transversale d'ouverture de l'organe d'expansion de chauffage ultérieur est agrandie, et
- pour une valeur réelle de la température de soufflage inférieure à la valeur la plus petite de la bande de tolérance, la section transversale d'ouverture de l'organe d'expansion de chauffage ultérieur est réduite.

8. Procédé selon la revendication 1, pour lequel
- l'installation frigorifique (10) avec un appareil de climatisation (1-1) recevant l'évaporateur (2) et le condensateur de chauffage (8) intérieur ou refroidisseur de gaz de chauffage (8) avec au moins un diffuseur est fournie, dans lequel au moyen d'un clapet de diffuseur réglable, la section transversale de diffuseur est réglable, et
- la position du clapet de diffuseur est utilisée comme paramètre d'installation de climatisation.

9. Procédé selon la revendication 8, pour lequel
- pour le clapet de diffuseur pour la définition d'une zone de position, une position ouverte supérieure (position x1) et une position ouverte inférieure (position x2, x2 < xi) sont prédéfinies,
- pour une position x du clapet de diffuseur avec x > x1, la section transversale d'ouverture de l'organe d'expansion de chauffage ultérieur (AE4) est agrandie, et
- pour une position x du clapet de diffuseur avec x < x2, la section transversale d'ouverture de l'organe d'expansion de chauffage ultérieur (AE4) est réduite.

10. Procédé selon la revendication 1, pour lequel
- l'installation frigorifique (10) est réalisée avec un appareil de climatisation (1.1) recevant l'évaporateur (2) et le condensateur de chauffage (8) intérieur ou refroidisseur de gaz de chauffage (8), un appareil de commande, avec lequel une valeur de consigne pour la température d'air de l'air traversant le condensateur de chauffage (8) intérieur ou refroidisseur de gaz de chauffage (8) et l'air sortant de celui-ci est déterminée, et un moyen de mesure, avec lequel une valeur réelle de la température d'air est détectée, et
- la valeur de consigne de la température d'air de l'air traversant le condensateur de chauffage (8) intérieur ou refroidisseur de gaz de chauffage (8) et de l'air sortant de celui-ci est utilisée comme paramètre d'installation de climatisation.

11. Procédé selon la revendication 10, pour lequel
- une valeur seuil de température avec une bande de tolérance pour la valeur de consigne de la température d'air de l'air traversant le condensateur de chauffage intérieur (8) ou refroidisseur de gaz de chauffage (8) et en sortant est déterminée,
- pour une valeur réelle de la température d'air supérieure à la valeur la plus grande de la bande de tolérance, la section transversale d'ouverture de l'organe d'expansion de chauffage ultérieur (AE4) est agrandie, et
- pour une valeur réelle de la température d'air inférieure à la valeur la plus petite de la bande de tolérance, la section transversale d'ouverture de l'organe d'expansion de chauffage ultérieur (AE4) est réduite.

12. Procédé selon la revendication 1, pour lequel
- la température d'entrée de moyen réfrigérant du moyen réfrigérant est mesurée à l'entrée de moyen réfrigérant du condensateur de chauffage (8) intérieur ou refroidisseur de gaz de chauffage (8) au moyen d'un capteur de température d'entrée de moyen réfrigérant, et
- la valeur de la température d'entrée de moyen réfrigérant mesurée est utilisée comme paramètre d'installation de climatisation.

13. Procédé selon la revendication 12, pour lequel
- une valeur seuil de température avec une bande de tolérance pour la valeur de la température d'entrée de moyen réfrigérant est déterminée,
- pour une valeur de la température d'entrée de moyen réfrigérant supérieure à la valeur la plus grande de la bande de tolérance, la section transversale d'ouverture de l'organe d'expansion de chauffage ultérieur (AE4) est agrandie, et
- pour une valeur de la température d'entrée de moyen réfrigérant inférieure à la valeur la plus petite de la bande de tolérance, la section transversale d'ouverture de l'organe d'expansion de chauffage ultérieur (AE4) est réduite.

14. Procédé selon la revendication 1, pour lequel
- la haute pression est mesurée au niveau du condensateur de chauffage intérieur (8) ou refroidisseur de gaz de chauffage (8) au moyen d'un capteur de pression, et
- la valeur de pression de la haute pression est utilisée comme paramètre d'installation de climatisation.

15. Procédé selon la revendication 14, pour lequel
- une valeur seuil de pression avec une bande de tolérance pour la valeur de pression de la haute pression au niveau du condensateur de chauffage (8) intérieur ou refroidisseur de gaz de chauffage (8) est déterminée,
- pour une valeur de pression supérieure à la valeur la plus grande de la bande de tolérance, la section transversale d'ouverture de l'organe d'expansion de chauffage ultérieur (AE4) est agrandie, et
- pour une valeur de pression inférieure à la valeur la plus petite de la bande de tolérance, la section transversale d'ouverture de l'organe d'expansion de chauffage ultérieur (AE4) est réduite.

16. Procédé selon l'une quelconque des revendications précédentes, pour lequel l'ouverture de section transversale de l'organe d'expansion de chauffage ultérieur (AE4) est dimensionnée de telle manière que pour une ouverture de section transversale minimale, l'organe d'expansion de chauffage ultérieur (AE4) soit fermé, et
- pour une ouverture de section transversale maximale, une surface soit libérée, laquelle correspond aux surfaces de section transversale des instructions de climatisation du circuit de moyen réfrigérant (1) en amont et en aval de l'organe d'expansion de chauffage ultérieur (AE4).
